# EUROPEAN PATENT APPLICATION

(11) **EP 1 508 989 A2**
(43) Date of publication of application: **23.02.2005**
(21) Application number: 04008625.8
(22) Date of filing: 08.04.2004
(51) Int. Cl.: H04L 1/00

(54) **Passive optical network using error correction code**

(30) Priority: 21.08.2003 KR 2003058024
(71) Applicant: Samsung Electronics Co., Ltd., Suwon-si, Gyeonggi-do (KR)
(72) Inventor: Kim, Hoon Samsung Electronics Co., Ltd., Suwon-si Gyeonggi-do (KR); Hwang, Seong-Taek Samsung Electronics Co., Ltd., Suwon-si Gyeonggi-do (KR)
(74) Representative: Grünecker, Kinkeldey, Stockmair & Schwanhäusser Anwaltssozietät

(57) **Abstract**

Disclosed is a passive optical network of code division multiple access using error correction code, which includes a plurality of optical networks units (ONU) and a central office, assigns a pseudo-noise (PN) code to each ONU, and transfers optical signals modulated by the PN code between the central office and each ONU, the passive optical network comprising the ONU which inserts error correction codes into upstream signals, transmits the upstream signals to the central office, and controls frequencies of the upstream signals using a response of the central office for the transmitted error correction codes and the central office which receives the upstream signals code division-encoded, decodes the upstream signals, inserts error counts of the error correction code included the upstream signals into downstream signals for the ONU, and transmits the downstream signals to the ONU.

## Description

The present invention relates to an optical network, and more particularly to a passive optical network using a Code Division Multiple Access mode and an error correction code.

A passive optical network (PON) has no active equipment except terminal equipment of the network outside the plant. An active optical network (AON) needs an active equipment outside the plant. Passive optical network are realized at a lower cost and are more easily maintained and managed than active optical networks.

In general, passive optical networks are realized in stars, buses and point to point (PTP) configurations. The PTP network has a one to one structure between a central office (CO) and each subscriber. Thus, it doesn't require the protocol to distinguish between subscribers. However, the PTP network requires a very large cost for initial installation of the network. In addition, an individual and separated optical line needs to be physically constructed for each subscriber. In contrast, the star or bus network requires a separate protocol or separate physical method for discriminating between subscribers. However, the star or bus network has many resources that can be shared, thus, enabling lower costs for installation of the network.

Particularly, Ethernet PONs, which are largely used for local access networks (LAN), can be constructed as a star or bus network. Thus, an Ethernet PON has a small initial construction cost and additionally can accept by many subscribers. In addition, asynchronous transmission multiplexing (ATM) PONs and wireless division multiplexing PON (WDM PONs) are used by many vendors.

Optical communication networks that are formed in a star or bus configuration have a number of limitations in upstream transmission. Generally, in downstream transmission, the central office broadcasts information to all subscribers and each subscriber receives only their own information. However, upstream transmission require modes to discriminate between subscribers because the central office combines data from many subscribers. In order to discriminate each subscriber, various modes of upstream transmission, such as time division multiple access (TDMA), wavelength division multiple access (WDMA) and code division multiple access (CDMA), etc., have been suggested.

Herein, TDMA mode enables each subscriber to send their own information during a predetermined time slot. It is also realized by a low cost light source, such as Fabry-Perot laser diode (FP-LD). However, the central office requires a burst mode receiver in TDMA mode. The burst mode receiver is an apparatus for receiving discontinuous optical signals. He discontinuous optical signals have intensities which change greatly due to difference between physical distances and signal losses according to subscribers. Typically, it is difficult to realize a high speed burst mode receiver, and thus it is difficult for networks using the burst mode receiver to conduct high speed operation.

Also, WDM mode enables each subscriber to use a light source of a different wavelength. Therefore the central office discriminates each subscriber by the wavelength. Accordingly, the WDM does not have optical beat interference noise, which is generated when signals from a plurality of light sources having the same or a similar wavelength are incident on a single receiver. However, the WDM requires expensive light sources due to subscribers using light sources having different wavelengths. In addition, it also requires additional circuit devices for the stability of wavelengths.

Lastly, CDMA mode enables subscribers to use different codes. This mode usually overcomes interference signals from other subscribers by means of orthogonal code and picks up specific subscribers.

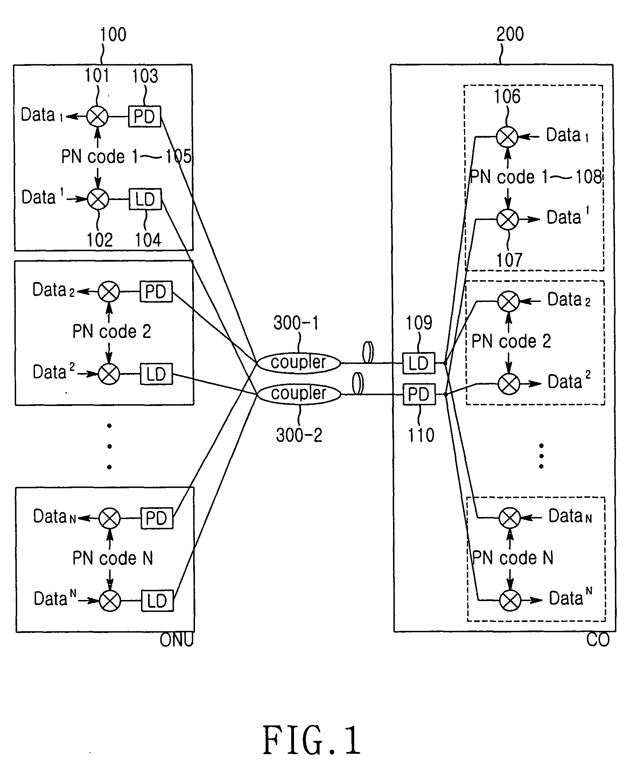

FIG. 1 illustrates a conventional passive optical network.

As shown in FIG. 1, the passive optical network includes a central office 200, a plurality of optical networks units 100, and optical couplers 300-1 and 300-2. The central office 200 includes a downstream signal processing unit and an upstream signal processing unit.

The downstream signal processing unit of the central office 200 includes a pseudo-noise code (PN code) generator 108, a CDMA encoder 106, a combiner, and a light source of the downstream signal processing unit. The PN code generator 108 generates each PN code corresponding to each subscriber. The CDMA encoder 106 code division-encodes signals by means of PN codes. The combiner combines a plurality of code division-encoded signals.

The upstream signal processing unit of the central office 200 includes a photo-electric converter 110, a splitter of electric signal, a PN code generator 108, and a CDMA decoder 107.

A plurality of optical networks units 100 include a downstream and upstream signal processing units.

The downstream signal processing unit of the plurality of optical networks units 100 includes photo-electric converters 103, PN code generators 105, and CDMA encoders i 101 which code division-encodes an electric signals from photo-electric converters 103 by means of signals ofPN code generators 105.

The upstream signal processing unit comprises a light source for upstream transmission.

As shown in FIG. 1, the CDMA passive optical network employs a different PN codes for each subscriber. In addition, the central office of the CDMA passive optical network decodes signals with the PN code assigned to each subscriber.

The CDMA passive optical network does not require a burst mode receiver, as required by the TDMA passive optical network, nor an expensive distributed feedback (DFB) laser, as required by the WDMA passive optical network. This is because each subscriber is discriminated by their code in the CDMA passive optical network.

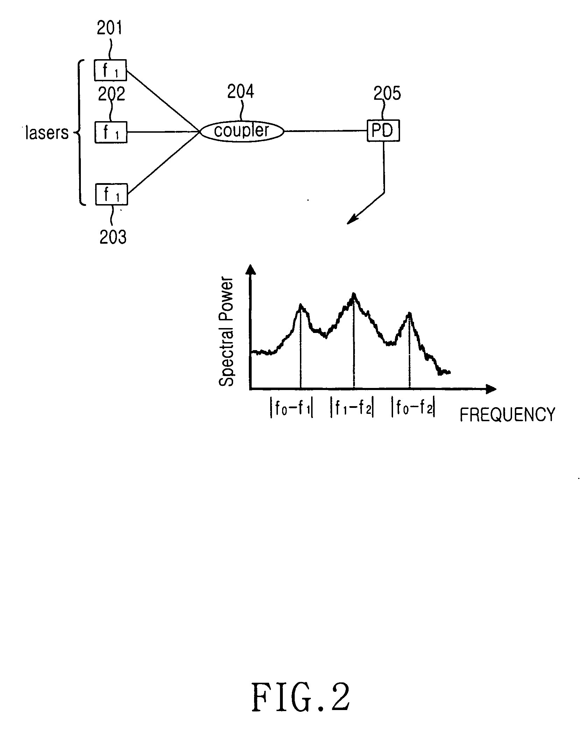

However, when the CDMA passive optical network employs an inexpensive light source, such as a Fabry-Perot laser diode, the quality of signals is degraded due to an optical beat interference noise. The optical beat interference noise occurs when signals from a plurality of light sources having the same or a similar wavelength are incident on a single optical receiver, as shown in FIG. 2.

Referring to FIG. 2, when optical signals having optical frequencies f0, f1, and f2 are incident on a single receiver, the optical beat interference noise occurs in frequency ranges |f0-f1|, |f1-f2|, and |f0-f2| corresponding to differences between frequencies of optical signals.

As shown in FIG. 2, if the CDMA optical network doesn't control the wavelength of the light source, the frequencies of optical signals have similar values. Thus, optical beat interference noise is generated and degrades the quality of the signals.

Generally, the signal quality degradation resulting from optical beat interference noise is more or less recovered during the procedure of demodulating codes. This is because the codes employed in the CDMA not only discriminate between subscribers but also protect against optical beat interference noise. Since, the signals have a correlation with the PN codes used during demodulation, the signals modulated by the PN codes are perfectly recovered. In contrast, optical beat interference noise has no correlation with the PN codes, thus, they are largely suppressed during the procedure of demodulation. At this time, the volume of the suppressed noise is related to a ratio of the transmission speed of the signals to transmission speed of the noise. The volume of the suppressed noise is called a processing gain. Thus, the passive optical network employing the CDMA mode not only identifies each subscriber but also overcomes the optical beat interference noise.

However, the probability that the frequency of each light source is similar to that of another light source is proportionate to the number of subscribers. Therefore, the processor gain must be enhanced in order to level up the quality of signals to a specific value. To enhance the processor gain, the transmission speed of codes must be increased or the transmission speed of each subscriber must be decreased.

Accordingly, in a conventional CDMA passive optical network, increases in the number of subscribers causes system performance to be greatly restricted by the optical beat interference noise, even though the CDMA passive optical network has the processor gain. Namely, the transmission speed of each subscriber must be lowered in order to acquire a high processor gain so that maximum transmission speed of each ONU are restricted. Also, as the number of subscribers increases, the processor gain is reduced, so that the number of ONUs to be connected to a single star network is greatly restricted.

Accordingly, the present invention has been made to reduce or overcome the above-mentioned problems occurring in the prior art.

The object of the present invention is to provide a passive optical network, for example a CDMA passive optical network, using error correction codes, which diminishes the degrading of signals resulting from optical beat interference noise.

This object is solved by the subject matter of the independent claims.

Preferred embodiments are defined in the dependent claims.

According to an aspect of the present invention, the passive optical network controls the wavelength of the light source in the optical network unit, and uses a demodulator and modulator using error correction codes and error detection function of error correction codes (forward error correction: FEC).

Another aspect of the present invention is to provide a passive optical network using error correction codes, which decreases the optical beat interference noise by actively controlling the light source of the optical network unit in order to increase the transmission speed of the optical network unit.

A further aspect of the present invention is to provide a passive optical network using error correction codes which can increase the number of subscribers connected with a single star network.

In accordance with the principles of the present invention, a passive optical network is provided, comprising a plurality of optical networks units, each unit having an assigned code and transmits signals modulated by the code, wherein each unit is configured the use error correction codes with the transmitted signals, and control frequencies of the signals; and a central office configured to decode the signals from an optical network unit, and provides error counts of the error correction code to the optical networks unit.
FIG. 1 illustrates a conventional CDMA passive optical network;
FIG. 2 illustrates an embodiment of optical beat interference noise in a CDMA passive optical network;
FIG. 3 illustrates a CDMA passive optical network using error correction codes according to first embodiment of the present invention;
FIG. 4 illustrates a CDMA passive optical network using error correction codes according to second embodiment of the present invention; and
FIG. 5 is a flow chart for a method controlling current bias of upstream light source using error data in a CDMA passive optical network using error correction codes according to an embodiment of the present invention.

Hereinafter, preferred embodiments of the present invention will be described in detail with reference to the accompanying drawings. Note that the same or similar components in drawings are designated by the same reference numerals as far as possible even if they are shown in different drawings. In the following description of the present invention, a detailed description of known functions and configurations incorporated herein will be omitted when it may make the subject matter of the present invention rather unclear.

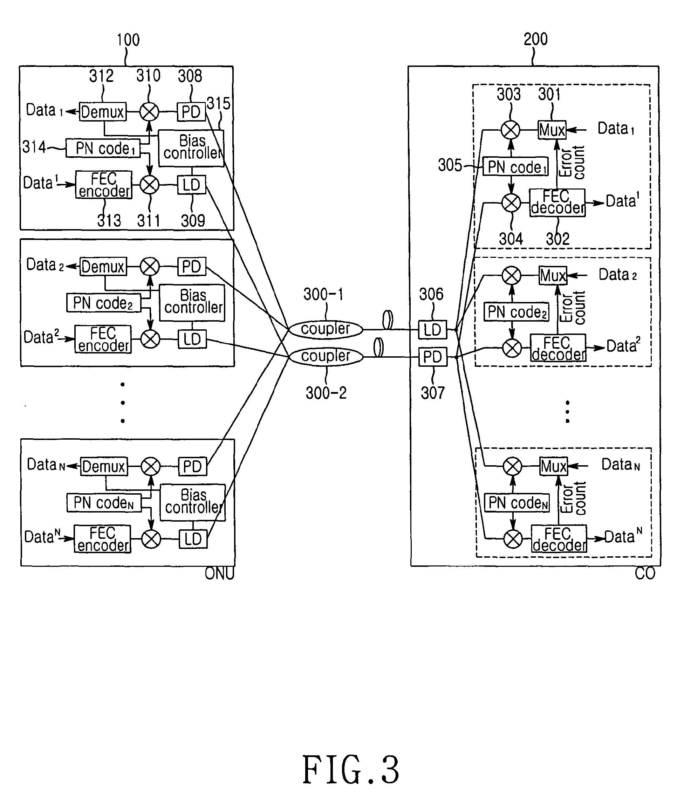

FIG. 3 illustrates a CDMA passive optical network using error correction codes according to an embodiment of the present invention.

In general, a CDMA passive optical network discriminates each subscriber using a CDMA mode and overcomes optical beat interference noise using a processor gain. However, as described above, as subscribers increase, conventional optical networks cannot sufficiently overcome the optical beat interference noise using only the processor gain. Therefore, as shown in FIG. 3, a CDMA passive optical network using error correction codes according to the present invention can additionally (1) overcome the optical beat interference noise by using error correction codes and (2) restrain generation of the optical beat interference noise by controlling an ONU light source through an error detection function of the error correction codes. The error correction codes causes an additional overhead to be put in data signals in the transmission section and causes errors of the data signals to be detected in the reception section. Also, the error correction codes can correct the transmission errors of the data signals provided a great number of errors are not generated during transmission. For example, the Reed-Soloman code with an overhead at a 7% of the total data can contribute to the 10⁻¹² bits error ratio even in the transmission environment where the 10⁻⁴ bits error ratio occurs.

As shown in FIG. 3, a passive optical network includes a central office 200, optical networks units 100 and optical couplers 300-1 and 300-2. The central office 200 includes an upstream signal processor unit and a downstream signal processor unit.

The downstream signal processor unit of the central office 200 includes a multiplexer 301, PN code generator 305, and a code division encoder 303, a combiner, and light source 306. The multiplexer 301 multiplexes downstream signals and error signals of error correction codes. The code division encoder 303 code division encodes signals multiplexed by means of PN codes. The combiner combines a plurality of signals code division encoded.

The upstream signal processing unit of the central office 200 includes a photo-electric converter 307, a splitter of electric signals, a PN code generator 305, a code division decoder 304 and an error correction code demodulator 302.

The optical network unit includes the downstream signal processing unit and the upstream signal processing unit.

The downstream signal processing unit of the optical network unit includes a photo-electric converter 308, a PN code generator 314, a code division decoder 310, demodulator 312, and a demultiplexer 312. The code division decoder 310 that code division-decodes by means of the signals from the PN code generator.

The upstream signal processing unit includes an error correction code modulator 313, a code division encoder 311, a light source of upstream signal 309, and a light source bias controller 315.

The following describes the operation of the passive optical network using error correction codes. The downstream transmission signal (e.g., Data₁) is multiplexed with error information (error count) from error correction code demodulator (FEC decoder) by the multiplexer 301 in the central office (CO) 200. The multiplexed signal is code division encoded by each code which is assigned to each subscriber (e.g., PN code) and generated by the PN code generator 305. It is combined with signals to be transmitted to other subscribers and input to the downstream light source (LD: Laser DIODE) 306.

The downstream light source 306 converts an electrical signal (the combination of code division encoded signal) into an optical signal. In addition, it transmits the optical signal through an optical fiber to the optical coupler 300-1. Then the optical coupler 300-1 splits the optical signal to each subscriber.

Each optical network unit (ONU) 100 converts the optical signal from the central office 200 into an electrical signal by the photo-electric converter (PD) 308. It also demodulates the code division encoded signals by means of a code assigned to each subscriber generated from the PN code generator 314. The demodulated signal includes the downstream signal and error information. The demodulated signal is split into the downstream signal and error information by the demultiplexer 312. Herein, the error information is transmitted through the light source bias controller 315 to the upstream light source 309, as described further below.

The upstream transmission signal (e.g., Data¹) is error-corrected by the error correction code modulator (FEC encoder) 313. It is also code division encoded by means of code assigned to each subscriber from the PN code generator 314 in optical network unit 100. The code division-encoded signal is input to the upstream light source 309, converted into optical signals, and transmitted through optical fiber to the optical coupler 300-2. The optical coupler 300-1 couples the optical signal from each subscriber and transmits to the central office 200.

The central office 200 splits the signal input to the photo-electric converter 307 into signals for of the subscribers. It also decodes the code division encoded signals by means of a code (e.g., PN code) assigned to each subscriber from the PN code generator 305. In addition, errors of the decoded signals generated during transmission are corrected through the error correction code demodulator (FEC decoder) 302. The error information of the decoded signal is transmitted to the multiplexer 301.

The CDMA passive optical network can decrease signal errors caused by noise (e.g., reception apparatus noise, optical beat interference noise, etc.) generated during upstream transmission using the CDMA mode and error correction codes. The error correction codes includes the Reed-Solomon code, the BCH code, the turbo cord, and the LDPC code.

However, if the light sources of all optical networks units 100 have the same wavelength, the above method cannot sufficiently overcome the optical beat interference noise. In order to supplement the above method, the CDMA passive optical network controls the optical signal frequency of the upstream light source 309 from each optical network unit 100 by means of the error information of the error correction codes.

As described above, the downstream transmission signals (e.g., Data₁, Data₂, ... Data_{N}) include error information. The error information is generated while the central office 200 demodulates the error correction coded upstream signals and monitors quality of the upstream signals.

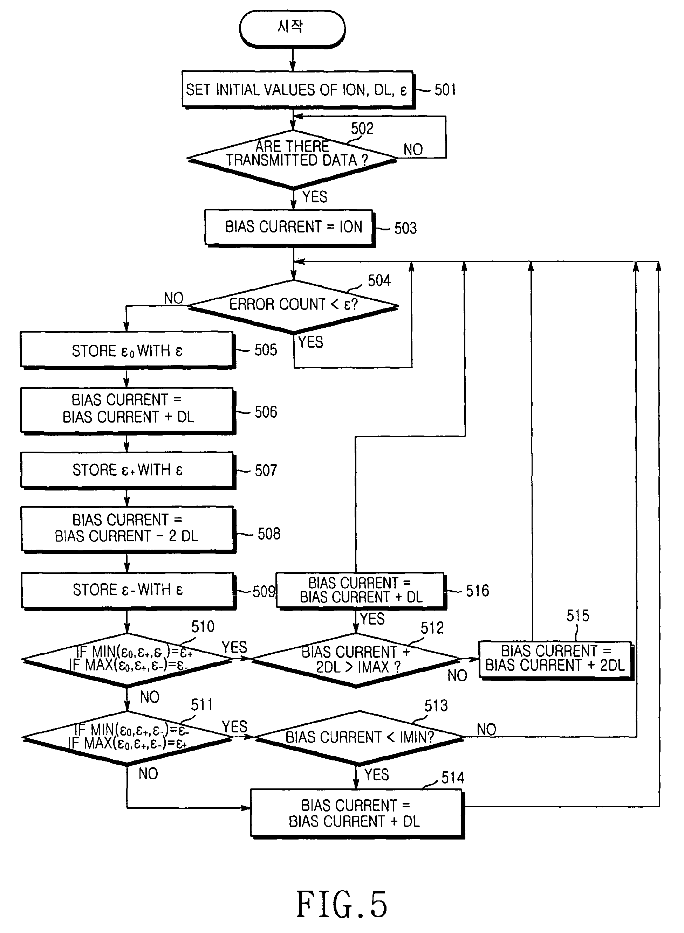

The central office 200 broadcasts the error information to each optical network unit 100 in the downstream transmission. Each optical network unit 100 receiving the error information detects the degrading degree of the signal quality. Therefore, the optical network unit 100 can control the frequencies of the upstream signals. As shown in FIG. 3, each optical network unit 100 splits the pure downstream signals and the error information using demultiplexer 312. The split error information adjusts the optical frequency of the upstream light source 309 by controlling the bias current of the upstream light source 309 through the light source bias controller 315. Generally, a Fabry-Perot laser or distribution feedback laser has an optical frequency variety coefficient corresponding to current changes about 0.2 GHz to 5 GHz/mA. The optical frequency of the upstream light source 309 changes in the range of several dB to tens of dB by controlling current having about 10mA intensity. Thus, the optical beat interference noise is diminished by controlling the current. The detailed description of the process of controlling the current will be shown in FIG. 5.

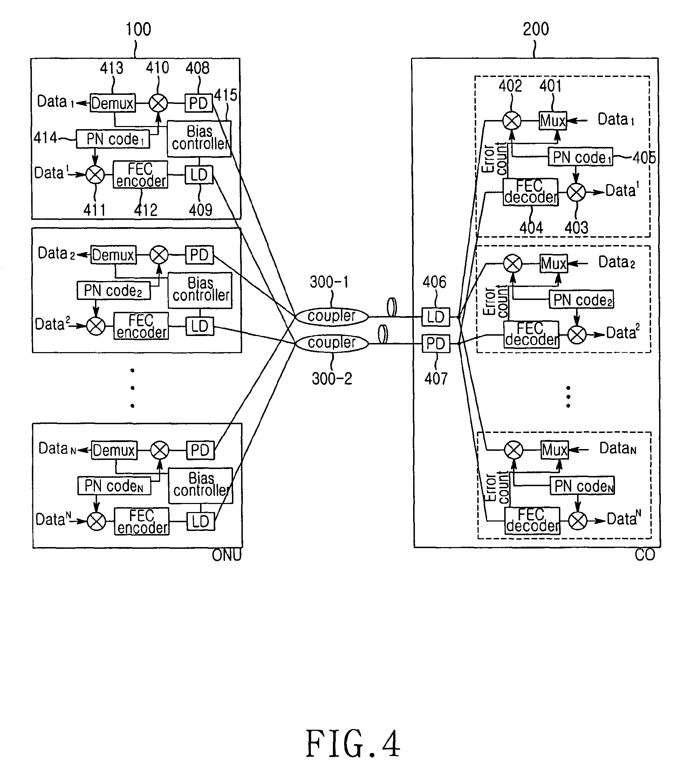

FIG. 4 illustrates a CDMA passive optical network using error correction codes according to second embodiment of the present invention.

FIG. 4 shows that an error correction modulator 412 is located after a code division encoder 411, in comparison with FIG. 3. Accordingly, in receiving the upstream signals in the central office 200, an error correction demodulator 404 is located before a code division decoder 403. The other structure shown in FIG. 4 is similar with that shown in FIG. 3, and a detailed description of these elements is omitted here.

FIG. 5, is a flow chart for a method controlling current bias of upstream light source using error information in a CDMA passive optical network using error correction codes according to an embodiment of the present invention.

The error information is checked from each of three current values, for example: (1) a present bias current value Ion, (2) a current value Ion+dl obtained by adding a predetermined variance to the present bias current value, and (3) a current value Ion-dl by subtracting a predetermined variance from the present bias value. The three values are compared with each other to determine the direction in which the bias current of the light source 309 is controlled. In this manner the quality of signal can be improved.

As shown in FIG. 5, initial values are stored for the present bias current Ion, the predetermined variance dl, an error information value ε, a minimum bias current value Imin, and a maximum bias current value Imax, in step 501. In step 502, a check is conducted to determine whether the data is transmitted or not. If the data is transmitted, the bias current is set to the present bias current (Ion). At operation time, the upstream signals are transmitted to the central office 200.

In steps 504 to 516, the transmission is established and then the central office 200 sends error information to the optical network unit 100. The optical network unit 100 checks using the error information whether the upstream signals normally are transmitted to the central office 100 or not.

In steps 504 to 506, if the error information is larger than a specific value (error count < ε ) because the optical beat interference noise is large, then the first error information ε0 of the present bias current Ion are stored and the present bias current is added to the predetermined variance Ion + dl.

In step 508 and 509, the second information ε+ of the added present bias current is restored, and the present bias current is subtracted to 2 by dl (that is, Ion- 2 dl ) and the third error information value ε- is re-measured and stored.

In the same manner, the three error information values, ε0, ε+, and ε- are extracted. The upstream light source current is moved to the direction having the smallest value of the three error information values.

Moreover, after the comparison between three error information values, ε0, ε+, and ε-, if the minimum value and the maximum value are ε + and ε- , respectively, then it is checked whether the sum Ion+dl is larger than a maximum current value Imax. If it is larger, the bias current is set as Ion, instep 516, but if not, the bias current is set as the sum Ion + dl, in step 516.

Meanwhile, after comparing the three error information values ε 0, ε+, and ε- , if the minimum and the maximum value are not ε+, and ε-, respectively, in step 510, then it is checked whether minimum and maximum are ε- and ε+, respectively in step 511.

Also, as a result of the procedure in step 511, if the minimum and the maximum value are ε- and ε+, respectively, then it is checked whether Ion-dl is smaller than minimum value Imin. If it is smaller, the bias current is set as Ion in step 514, and if not, the bias current is set as Ion-dl in step 513.

Also, as a result of the procedure in step 511, if the minimum and the maximum value are not ε-, and ε+, respectively, then the bias current is set as Ion in step 514.

In the same manner, it is confirmed whether the newly set bias current is suitable for the operation of the system, in order to avoid mis-conduction of system and trouble of light source owing to over-current and low-current. The above method is repeatedly conducted while controlling bias current of the light source so that system performance is not degraded from the optical beat interference noise.

As described above, the present invention overcomes the degrading of signals influenced by the optical beat interference noise by using CDMA mode and error correction codes.

In particular, the present invention diminishes the optical beat interference noise by controlling the frequencies of the optical signals. Controlling the frequencies of the optical signals is conducted using an error detection function of error correction codes. Thus, transmission speed of optical networks units in passive optical communication networks (realized by a light source having a low cost) is improved. In addition, the number of subscribers is increased, so that the passive optical communication networks have a lower cost of initial construction and extensibility.

While the invention has been shown and described with reference to certain preferred embodiments thereof, it will be understood by those skilled in the art that various changes in form and details may be made therein without departing from the scope of the invention.

## Claims

1. A passive optical network comprising:
a plurality of optical networks units, each unit having an assigned code and transmit signals modulated by the code, wherein each unit is configured the use error correction codes with transmitted signals, and control frequencies of the signals; and
a central office configured to decode the signals from an optical network unit, and provides error counts of the error correction code to the optical networks units.

2. The passive optical network as claimed in claim 1, wherein the passive optical network is a code division multiple access optical network.

3. The passive optical network as claimed in claim 2, wherein the frequencies of the optical signal are controlled using error counts from the central office

4. The passive optical network as claimed in claim 3, wherein the assigned code is a pseudo-noise code

5. The passive optical network as claimed in claim 4, wherein the optical signals from the optical line unit are upstream signals and signals from the central office are downstream signals.

6. The passive optical network as claimed in claim 5, wherein the central office comprises:
a multiplexer for mulitplxing the error counts of the error correction codes and the downstream signals for the optical networks units:
a first pseudo-noise code generator for generating a pseudo-noise code for code division multiple for each subscriber;
a first code division encoder for code division encoding the multiplexed signals by the multiplexer with the pseudo-noise code generated by the pseudo-noise code generator;
a downstream light source for transmitting and converting the code division encoded signals into optical signals;
a first photo-electric converter for converting the optical signals from the optical networks units into electrical signals;
a first code division decoder for code division decoding signals from the first photo-electric converter using the pseudo-noise code generated by the first pseudo-noise code generator; and
a error correction code demodulator for transferring an error counter from the error correction code of the code division-decoded signals to the multiplexer.

7. The passive optical network as claimed in claim 6, wherein the optical networks units comprises :
a second photo-electric converter for converting the downstream signals from the central office into the electric signals;
a second pseudo-noise code generator for generating pseudo-noise code assigned to the optical networks units for code division multiple;
a second code division decoder for code division decoding the electric signals from the second photo-electric converter with the pseudo-noise code of the second pseudo-noise code generator;
a demultiplexer for demultiplexing the multiplexed downstream signals and error counter of error correction codes from the code division-decoded signals;
an error correction code modulator for modulating and inserting error correction code into the upstream signals in upstream transmission;
a second code division encoder for code division encoding the signals modulated from the error correction code modulator by the second pseudo-noise code generator;
an upstream light source for transmitting the code division encoded signals into optical signals; and
a light source bias controller for controlling the upstream light source bias current by using error counter transmitted from the demultiplexer.

8. The passive optical network as claimed in claim 5, wherein the central office comprises:
a multiplexer for mulitplxing error counts of the error correction codes and the downstream signals for the optical networks units;
a first pseudo-noise code generator for generating pseudo-noise codes for code division multiple for each subscriber;
a first code division encoder for code division encoding the multiplexed signals with the pseudo-noise codes generated by the pseudo-noise code generator;
a downstream light source for transmitting and converting the code division encoded signals into optical signals;
a first photo-electric converter for converting the optical signals from the optical networks units into electrical signals;
a error correction code demodulator for extracting error counter from error correction codes of the code division decoded signal included electric signals converted by the first photo-electric converter and transferring the extracted error counter to the multiplexer; and
a first code division decoder for code division decoding signals not having the error counter of the error correction code extracted by the error correction code demodulator with the pseudo-noise code generated by the first pseudo-noise code generator.

9. The passive optical network using error correction code as claimed in claim 8, wherein the optical networks units comprises :
a second photo-electric converter for converting the downstream signals received from the central office into the electric signals;
a second pseudo-noise code generator for generating pseudo-noise codes assigned to the optical networks units for code division multiple;
a second code division decoder for code division decoding the electric signals from the second photo-electric converter with pseudo-noise codes of the second pseudo-noise code generator;
a demultiplexer for demultiplexing the multiplexed downstream signals and error counter of error correction codes from the code division-decoded signals;
a second code division encoder for code division encoding upstream signals by the second pseudo-noise code generator;
an error correction code modulator for modulating and inserting error correction codes into the upstream signals code division encoded by the second code division encoder in time of upstream transmission;
an upstream light source for transmitting the code division encoded signals into optical signals; and
a light source bias controller for controlling the upstream light source bias current by means of error counter transmitted from the demultiplexer.

10. The passive optical network as claimed in one of claims 1 to 9, wherein an error correction code comprises the Reed-solomon code.

11. The passive optical network as claimed in one of claims 1 to 9, wherein an error correction code comprises the BCH code.

12. The passive optical network as claimed in one of claims 1 to 9, wherein an error correction code comprises the turbo cord.

13. The passive optical network as claimed in one of claims 1 to 9, wherein an error correction code comprises the LDPC cord.

14. An optical network unit for use in a passive optical network, the optical network unit comprising, a processor configured to (1) transmit signals modulated by an assigned code, (2) use error correction codes with the transmitted signals, and (3) control frequencies of the transmitted signals by using an error correction code response from a central office.

15. The optical network unit as claimed in claim 14, adapted to operate the passive optical network according to one of claims 1 to 13.
